(19) Europäisches Patentamt
European Patent Office
Office européen des brevets

(11) **EP 2 120 291 A1**

(12) **EUROPÄISCHE PATENTANMELDUNG**

(43) Veröffentlichungstag:
**18.11.2009 Patentblatt 2009/47**

(51) Int Cl.:
*H01Q 9/00* (2006.01)     *G01N 21/35* (2006.01)

(21) Anmeldenummer: **09160392.8**

(22) Anmeldetag: **15.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.05.2008 DE 102008023991**

(71) Anmelder: **Forschungszentrum Dresden - Rossendorf e.V.**
**01328 Dresden (DE)**

(72) Erfinder:
- **Winnerl, Stephan**
  **01309, Dresden (DE)**
- **Schneider, Harald**
  **01326, Dresden (DE)**
- **Dreyhaupt, André**
  **01097, Dresden (DE)**
- **Peter, Falk**
  **01237 Dresden (DE)**
- **Helm, Manfred**
  **01309, Dresden (DE)**

(54) **Skalierbare Terahertz-Antennen**

(57) Mit der Erfindung wird eine Klasse von Bauelementen beschrieben, die es erlauben, beliebige Moden (definiert als räumliche Verteilung der elektrischen Feldstärke der Strahlung) von Terahertz-Wellen elementar zu erzeugen und in optimaler Weise, d.h. unter bestmöglicher Anpassung der Detektorgeometrie an die Mode, zu detektieren. Diese Freiheit bei der Erzeugung von Moden ist von grundlegendem Interesse für neue Anwendungen auf dem Gebiet der Terahertz-Strahlung und bringt große Vorteile bei Systemen, die Terahertz-Wellenleiter nutzen. Diese Terahertz-Emitter und -Detektoren zeichnen sich durch ihre Skalierbarkeit aus, so dass in den Emittern hohe Beschleunigungsfelder bei geringer Beschleunigungsspannung über große Flächen realisiert werden können. Damit wird der Betrieb vereinfacht und die Effizienz erhöht.

Abbildung 8

a)          b)

EP 2 120 291 A1

**Beschreibung**

Im Spektralbereich der Terahertz-Strahlung (Frequenzbereich von 10 GHz bis 50 THz) fanden in den letzten Jahren eine Reihe wissenschaftlicher und technischer Entwicklungen statt. Gepulste Terahertz-Strahlung kann mittels photoleitender Antennen auf Halbleitersubstraten erzeugt und detektiert werden. In Emitterantennen werden Ladungsträger mit Hilfe von kurzen Laserpulsen angeregt, die erzeugten Ladungsträger werden in einem elektrischen Feld, das von einer Spannungsquelle geliefert wird, beschleunigt und strahlen dabei Terahertz-Strahlung ab. Antennen zur Detektion funktionieren reziprok, d.h. photogenerierte Ladungsträger werden durch das Terahertz-Feld beschleunigt und rufen damit einen Photostrom hervor, der gemessen wird. Neben photoleitenden Antennen werden auch nichtlineare optische Kristalle zur Erzeugung und Detektion von Terahertz-Strahlung verwendet.

Photoleitende Antennen können auch zur Erzeugung und Detektion von kontinuierlicher Terahertz-Strahlung verwendet werden. Die Emissionsantenne wird dabei mit zwei Lasern beleuchtet, deren Emissionsfrequenzen $f_1$ und $f_2$ sich durch eine konstante Differenzfrequenz unterscheiden. Liegt diese Differenzfrequenz im Terahertz-Bereich, so schwankt die Intensität der überlagerten Strahlen mit der Differenzfrequenz und in der photoleitenden Antenne fließt ein entsprechender Strom. Durch Variation der Differenzfrequenz lässt sich die Terahertz-Strahlung spektral durchstimmen. [E.R. Brown, K.A. McIntosh, K.B. Nichols und C.L. Dennis: Photomixing up to 3.8 Terahertz-in low-temperature-grown GaAs. Applied Physics Letters, Vol. 66, pp. 285-287, 1995].

Die am meisten verbreitete Ausführungsform von photoleitenden Antennen, insbesondere für die Erzeugung und Detektion gepulster Terahertz-Strahlung, ist die Dipolantenne

Breitbandige Terahertz-Antennen (Bowtie-Antennen, logarithmisch periodische Antennen und logarithmische Spiralantennen) emittieren linear polarisierte Strahlung. Als Detektionsantennen eingesetzt, detektieren sie die jeweilige linear polarisierte Komponente der Strahlung. Bei logarithmischen Spiralantennen hängt die Polarisationsrichtung von der Wellenlänge der Strahlung ab. Daher werden diese Antennen für die Erzeugung spektral schmalbandiger kontinuierlicher Strahlung eingesetzt, nicht aber für die Erzeugung spektral breitbandiger gepulster Strahlung. Für gepulste Strahlung werden die einzelnen spektralen Komponenten mit unterschiedlicher Polarisationsrichtung emittiert, somit entstehen Pulse mit sehr schlecht definierter Polarisation.

Die Feldstärke der emittierten Terahertz-Strahlung nimmt proportional zu der Feldstärke des beschleunigenden elektrischen Feldes zu. Weiterhin nimmt sie proportional mit der anregenden Laserleistung zu. Dies gilt für Ladungsträgerdichten unterhalb einiger $10^{17}$ cm$^{-3}$. Werden durch Laserstrahlung hoher Intensität größere Ladungsträgerdichten erzeugt, so treten Sättigungseffekte auf. Um gleichzeitig hohe Beschleunigungsfelder und hohe Laserleistungen nutzen zu können, wurde eine periodische Elektrodenstruktur mit einer speziellen Schattenmaske entwickelt [WO 2006/047975]. Auch diese optimierte Terahertz-Antenne emittiert linear polarisierte Terahertz-Strahlung in Form einer Gauß-Mode.

Es zeigte sich, dass radial polarisierte Terahertz-Wellen aus speziellen Emittern sehr viel besser an Wellenleiter-Drähte koppeln können als linear polarisierte Strahlung [J. A. Deibel, K. Wang, M. D. Escarra, and D. M. Mittleman, OPTICS EXPRESS, Vol. 14, pp. 279-290, 2006]. In US 2008/0023633A1 sind ebenfalls einfach radial polarisierte Terahertz-Wellen beschrieben. Die verbesserte Effizienz wird mit einem Faktor 100 angegeben. Die radialsymmetrischen Emitter stellen eine einfache Elektrodenstruktur dar, bei der eine kreisförmige innere Elektrode von einer ringförmigen äußeren Elektrode umschlossen ist. An einer Stelle im Ring gibt es eine Öffnung für die Zuleitung für die innere Elektrode. Es wurde vorgeschlagen, radial polarisierte Terahertz-Strahlung eines derartigen Emitters über einen Wellenleiter zu einem Detektor gleicher Geometrie zu übertragen [WO 2006/019776].

JP 2000201026 A beschreibt linear polarisierte, gepulste Hochfrequenz-Oszillatoren mit abgedeckten parallelen streifenförmigen Elekrodenanordnungen.

Ein Nachteil der bisher verwendeten Emitter für radial polarisierte Terahertz-Wellen ist, dass diese Strukturen wenig Flexibilität hinsichtlich ihrer Dimensionierung zulassen. Für eine möglichst effiziente Erzeugung der Terahertz-Strahlung muss die Feldstärke des Beschleunigungsfeldes möglichst groß sein, was durch einen kleinen Abstand zwischen ring- und kreisförmiger Elektrode erreicht werden kann. Gleichzeitig soll eine möglichst große Anzahl von Ladungsträgern optisch generiert werden, ohne eine Konzentration zu erreichen, bei der Sättigungseffekte auftreten. Dies bedingt einen größeren Elektrodenabstand. Schließlich muss der Elektrodenabstand zum Wellenleiterdurchmesser passen. Diese Anforderungen erfordern Kompromisse zu Lasten einer guten Effizienz. Weiterhin muss für eine optimale Anregung die lokal erzeugte Terahertz-Feldstärke der Feldverteilung einer TM$_{01}$-Welle entsprechen. Die radiale Abhängigkeit der Terahertz-Feldstärke wird für eine Sommerfeldwelle durch die Hankelfunktion $H_1^{(1)}(r)$ beschrieben, die im interessierenden Bereich proportional zu 1/$r$ ist. Diese Abhängigkeit ergibt sich auch für das Beschleunigungsfeld des Emitters basierend auf der kreis- und ringförmigen Elektrode. Damit erhält man eine optimale Moden-Anpassung, wenn die optische Anregung über die gesamte Fläche des Emitters konstant ist. Bei einer Anregung mit einer Gaußförmigen Intensitätsverteilung entstehen also Anpassungsverluste.

Aufgabe der Erfindung ist es weitere grundlegende Moden für Terahertz-Strahlung, beispielsweise

TE$_{01}$-Wellen (auch als H$_{01}$-Wellen bezeichnet) für Wellenleiter und ihre entsprechenden Gauss-Bessel Moden im Freiraum, erzeugen und detektieren kann. Bisherige Terahertz-Übertagungsstrecken und Terahertz-Spektrometer verwenden fokussierende Terahertz-Optiken, da die Emission von Terahertz-Quellen mit bisherigen Antennen stark divergent ist. Fokussierende Elemente für Terahertz-Strahlung sind entweder Linsen oder gekrümmte Spiegel. Für Terahertz-Linsen gibt es kaum geeignete Materialien, weil viele Materialien im Terahertz-Bereich Absorption und Dispersion aufweisen. Ausnahmen wie z.B. hochohmiges Silizium führen zu Linsen, die auf Grund ihres hohen Brechungsindex und der fehlenden Transparenz für sichtbare Justierstrahlen schwer zu justieren sind. Terahertz-Spiegel sind ebenfalls nicht einfach zu justieren und sie sind wegen ihrer großen Abmessungen nicht für kompakte Terahertz-Spektrometer geeignet.

Mit der Erfindung wird eine Klasse von Bauelementen beschrieben, die es erlauben, beliebige Moden (definiert als räumliche Verteilung der elektrischen Feldstärke der Strahlung) von Terahertz-Wellen elementar zu erzeugen und in optimaler Weise, d.h. unter bestmöglicher Anpassung der Detektorgeometrie an die Mode, zu detektieren. Diese Freiheit bei der Erzeugung von Moden ist von grundlegendem Interesse für neue Anwendungen auf dem Gebiet der Terahertz-Strahlung und bringt große Vorteile bei Systemen, die Terahertz-Wellenleiter nutzen. Solche Systeme sind z. B. Terahertz-Spektrometer und Terahertz-Mikroskope. Diese Terahertz-Emitter und -Detektoren zeichnen sich durch ihre Skalierbarkeit aus, so dass in den Emittern hohe Beschleunigungsfelder bei geringer Beschleunigungsspannung über große Flächen realisiert werden können. Dies vereinfacht den Betrieb und erhöht die Effizienz. Für Detektoren bringt das Konzept der Skalierbarkeit den Vorteil, dass auch unfokussierte Terahertz-Strahlung effizient detektiert werden kann. Für die Detektoren ist die Skalierbarkeit weiterhin sehr vorteilhaft, da die gesamte Intensitätsverteilung der Terahertz-Strahlung genutzt werden kann und nicht nur ein kleiner räumlicher Ausschnitt. Mit Diplolantennen können im Allgemeinen nur kleine räumliche Ausschnitte der Intensitätsverteilung zur Detektion beliebiger Moden genutzt werden, da nur in diesen Ausschnitten die Strahlung näherungsweise linear polarisiert ist. Aufgrund ihres skalierbaren Aufbauprinzips sind die Emitter und Detektoren sehr flexibel bezüglich der Spotgrößen der nah-infraroten und Terahertz-Strahlen. Insbesondere lassen sich damit Terahertz-Strahlen fokussieren ohne fokussierende Terahertz-Optiken einzusetzen.

Mit der hier vorgestellten Erfindung lassen sich Terahertz-Übertagungsstrecken und Terahertz-Spektrometer verwirklichen, bei denen ein Terahertz-Fokus entsteht, ohne dass fokussierende Terahertz-Optiken benötigt werden. Die Fokussierung erfolgt allein durch die geeignete Fokussierung des anregenden Laserstrahls. Für diese Strahlung im sichtbaren oder nah-infraroten Spektralbereich ist die Fokussierung technisch sehr einfach. Dieses Prinzip wird ein einem Ausführungsbeispiel veranschaulicht. In dem bisherigen Stand der Technik ist von parallelen, linearen Streifenmustern als streifenförmige Metallisierung der Elektroden die Rede. Metallisierungsstreifen im Sinne der Erfindung sind jegliche Form, die nicht durch den Stand der Technik abgedeckt sind.

Der Lösungsweg wird zunächst anhand einer Emitterstruktur für gepulste Terahertz-Strahlung beschreiben, im Weiteren wird auf die Besonderheiten für kontinuierliche Terahertz-Erzeugung und Terahertz-Detektion eingegangen. Ausgangspunkt der Überlegung ist die gewünschte Mode. Die Elektrodenstruktur des Emitters wird aus Metallisierungsstreifen so aufgebaut, dass die Metallisierungsstreifen stets senkrecht auf den elektrischen Feldlinien der Mode stehen. Die Metallisierungsstreifen werden entlang der Richtung der Feldlinien periodisch angeordnet. Diese Anordnung besitzt die richtige Symmetrie für die Erzeugung der gewünschten Terahertz-Mode. Die Metallisierungsstreifen werden mit ihren jeweils übernächsten Nachbarn elektrisch verbunden, so dass man ein Paar von strukturierten Elektroden entsteht. Um Kurzschlüsse zu vermeiden werden an Kreuzungspunkten der beiden Elektroden Unterbrechungen in den Metallisierungsstreifen vorgesehen. Um zu erreichen, dass die elementar erzeugten Terahertz-Wellen konstruktiv interferieren, wird die Terahertz-Erzeugung in jedem zweiten Zwischenraum zwischen den Metallisierungsstreifen unterdrückt. Dies lässt sich erreichen durch Vermeiden einer optischen Anregung in diesem Bereich, beispielsweise durch eine Metallisierungsschicht, die von den Elektroden elektrisch isoliert ist. Weiterhin können dielektrische Spiegel (Bragg-Spiegel) die Anregung dieser Bereiche verhindern. Alternativ kann die Beschleunigungsfeldstärke oder die Beweglichkeit der Ladungsträger in den fraglichen Bereichen vermindert werden. Die Beweglichkeit kann vermindert werden durch Implantation geeigneter Ionen, die entweder selbst tiefe Störstellen bilden oder die Kristallstruktur des Photoleiters bei der Implantation schädigen. Die elektrische Feldstärke kann durch Ätzen eines Grabens vermindert werden. Für die optimale Dimensionierung des Terahertz-Emitters können die Abstände der Metallisierungsstreifen so eingestellt werden, dass unter Berücksichtigung der Intensitätsverteilung des anregenden Lasers die erzeugte Terahertz-Feldstärke der Modenstruktur entspricht. Alternativ kann dies erreicht werden, indem die Metallisierungsstreifen nicht zu einem Elektrodenpaar zusammengefasst werden, sondern einzeln oder gruppenweise Zuleitungen erhalten. An diese Zuleitungen werden dann die für die Mode benötigten Spannungen eingestellt.

Für gepulste Terahertz-Emitter eigenen sich Halbleitersubstrate hoher Beweglichkeit und hoher elektrischer Durchschlagsfestigkeit. Die Bandlücke der Halbleiter muss kleiner sein als die Quantenenergie des anregenden Lasers. Insbesondere sind dies III-V-Verbindungshalbleiter wie GaAs, InP, InAs, InGaAs, InSb, GaSb, GaN, GaNAs, InGaN, oder GaInNAs.

Materialien für Detektoren und Strukturen zur Erzeugung kontinuierlicher Terahertz-Strahlung benötigen Substrate mit einer kurzen Lebensdauer der Ladungsträger. Diese findet sich in tieftemperatur-gewachsenen Materialien (z.B. low-temperature grown (LT) GaAs) oder in durch Ionenimplantation geschädigten Kristallen.

Speziell bei der Erzeugung kontinuierlicher Terahertz-Strahlung ist es entscheidend, dass die beiden Laserfelder räumlich über die gesamte Fläche perfekt überlappen, so dass die relative Phase zwischen beiden Anteilen über die ganze Fläche konstant ist und somit die Ausbildung von Interferenzstreifen oder Ringen vermieden wird. Dies kann z.B. erreicht werden, indem die beiden Laserstrahlen durch eine Single-Mode-Faser geleitet werden, bevor sie auf den Terahertz-Emitter treffen.

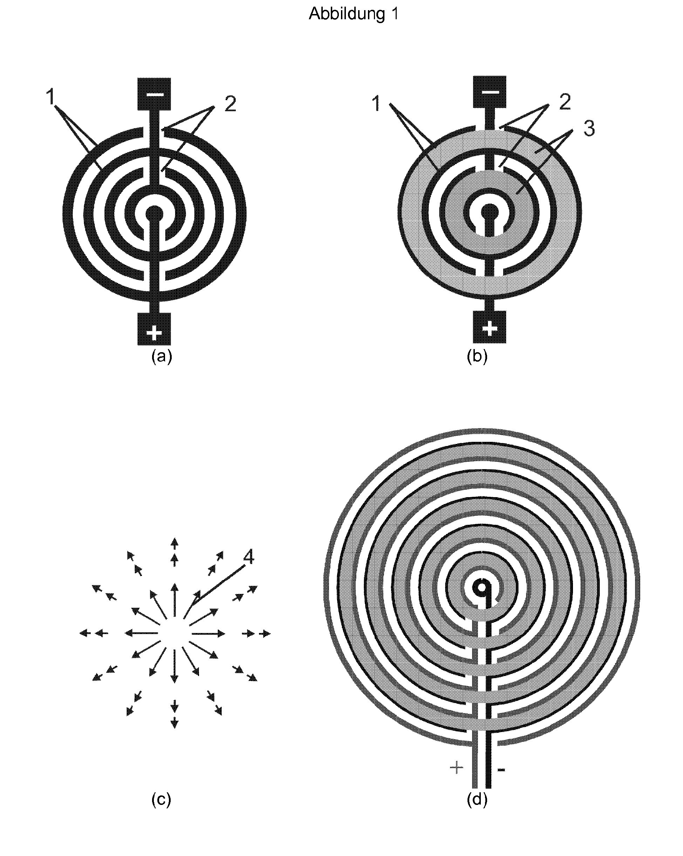

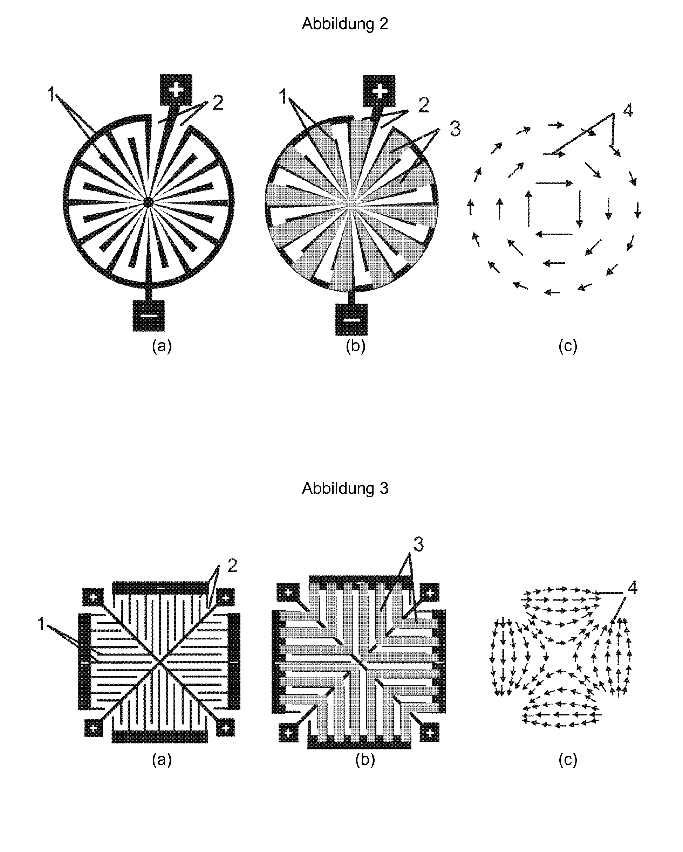

Die Erfindung wird anhand einiger Ausführungsbeispiele beschreiben. In Abb. 1 ist eine Elektrodenstruktur aufbauend auf konzentrischen Metallisierungsstreifen dargestellt (Abb. 1a). Unterbrechungen der Metallisierungsstreifen verhindern elektrische Kurzschlüsse. In Abb. 1b ist die gleiche Struktur dargestellt, nachdem eine elektrisch von der ersten Ebene isolierte zweite Metallisierungsschicht aufgebracht wurde. Sie verhindert destruktive Interferenz zwischen Terahertz-Elementarwellen, die in benachbarten Zwischenräumen der Elektroden erzeugt werden. Abb. 1c zeigt die resultierende radial polarisierte Terahertz-Mode. In Abb. 1d ist die Elektrodenstruktur mit einer alternativen Gestaltung der Zuleitung. Sie hat zur Folge, dass die Kontakte auf eine Seite der Struktur gelegt werden können, während sie in Abb. 1a auf gegenüber liegenden Seiten liegen. In Abbildung 2 ist die erste Metallisierung (Abb. 2a), erste und zweite Metallisierung (Abb. 2b) sowie die Feldverteilung (Abb. 2c) für eine azimutal polarisierte Terahertz-Welle dargestellt. Abb. 3 zeigt die erst Metallisierung (Abb. 3a), erste und zweite Metallisierung (Abb. 3b) sowie die Feldverteilung (Abb. 3c) einer Terahertz-Welle mit quadrupolartiger Modenstruktur. Bei der in Abb. 3 dargestellten Antenne stehen die Elektroden nicht an jedem Ort senkrecht zu den Feldlinien der gewünschten quadrupolartigen Strahlungs-Mode. Vielmehr handelt es sich um eine vereinfachte Struktur, bei der die Elektroden in Teilbereichen der Struktur parallel angeordnet sind. Dieses Ausführungsbeispiel zeigt, dass mit dem hier vorgestellten Konzept Strahlungsmoden in einer Multipolentwicklung der Feldverteilung erreicht werden können.

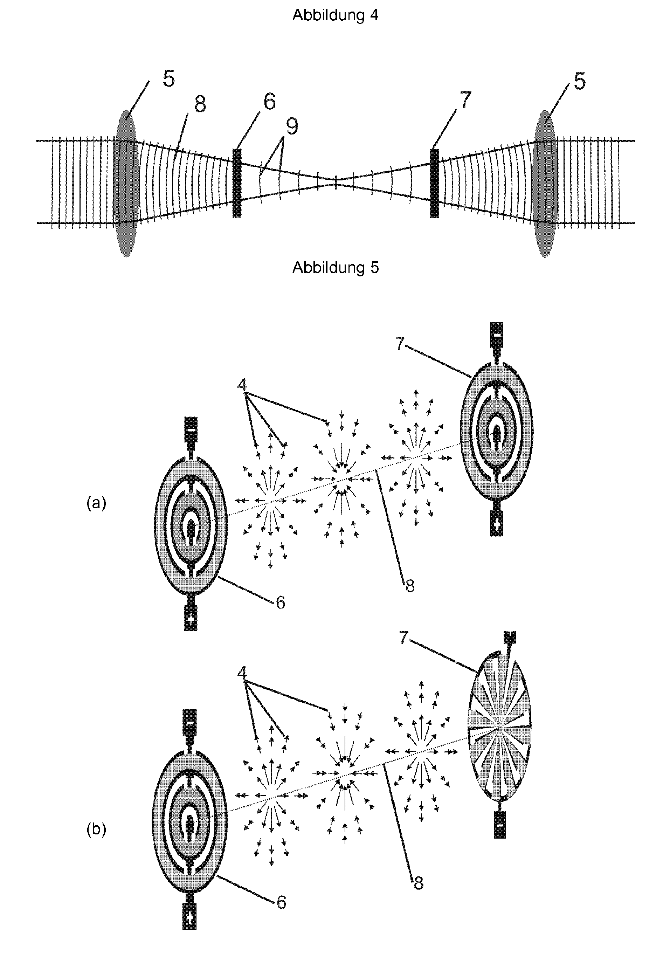

In Abb. 4 ist eine Terahertz-Übertragungsstrecke gezeigt. Dabei lässt sich ein Terahertz-Fokus erreichen, ohne dass fokussierende Element für Terahertz-Strahlung wie Linsen und Spiegel eingesetzt werden. Die anregende Laserstrahlung wird fokussiert. Durch die gekrümmten Wellenfronten wird erreicht, dass die Erregung der Terahertz-Wellen im Emitter an unterschiedlichen Orten zeitlich versetzt erfolgt. Da die Ausbreitungsgeschwindigkeit der Terahertz-Welle im Substrat des Emitters sehr ähnlich der Geschwindigkeit des anregenden Laserlichts ist, entstehen gekrümmte Terahertz-Wellenfronten, die in einem Fokus resultieren. In diesem Fokus kann beispielsweise eine Probe für spektroskopische Untersuchungen gebracht werden. Nach dem Fokus wird die Strahlung detektiert nach dem gleichen Prinzip wir bei der Emission. Die Skalierbarkeit der Fläche der erfindungsgemäßen Antennen erlaubt hier eine sehr flexible Dimensionierung der Übertragungstrecke bzw. des Spektrometers. Für bestimmte Moden können mit dieser Erfindung spezielle neue Effekte erreicht werden, beispielsweise weist eine Mode wie in Abb. 1c im Fokus eine Komponente des elektrischen Feldes in Ausbreitungsrichtung der Welle auf.

In Abb. 5 ist ein Beispiel für eine modenselektive Terahertz-Übertragungsstrecke dargestellt. In Abb. 5a sind die Elektrodenstrukturen der Emissions- und Detektionsantenne gleich. Somit ist die Detektion optimiert für die Strahlungsmode, die vom Emitter erzeugt wird. Für eine in den Terahertz-Strahl gebrachte Probe lassen sich damit die Absorption und Dispersion für diese Mode untersuchen. In Abb. 5b ist eine Übertragungstrecke dargestellt, bei der die Elektrodenstruktur des Empfängers komplementär zu der des Senders ist. Die Elektroden stehen an gleichen Orten zueinander senkrecht. Damit sind Sender und Empfänger für komplementäre Strahlungsmoden optimiert. Für eine ungestörte Übertragungstrecke würde der Detektor also die vom Sender nicht abgestrahlten Terahertz-Wellen nicht registrieren. Wird allerdings ein Objekt in den Strahlengang gebracht, das die Modenstruktur ändert, so wird dies registriert. Im Sinne einer Dunkelfeldabbildung ist der Kontrast bei dieser Art der Messung sehr hoch. Da dies gemäß der Erfindung mit beliebigen Moden möglich ist, gehen die Möglichkeiten weit über die bisher bekannte polarisationsselektive Detektion für linear polarisierte Strahlung [E. Castro-Camus, J. Lloyd-Hughes, M.B. Johnston, M.D. Fraser, H.H. Tan and C. Jagadish, Applied Physics Letters, Vol. 86, 254102, 2005] hinaus.

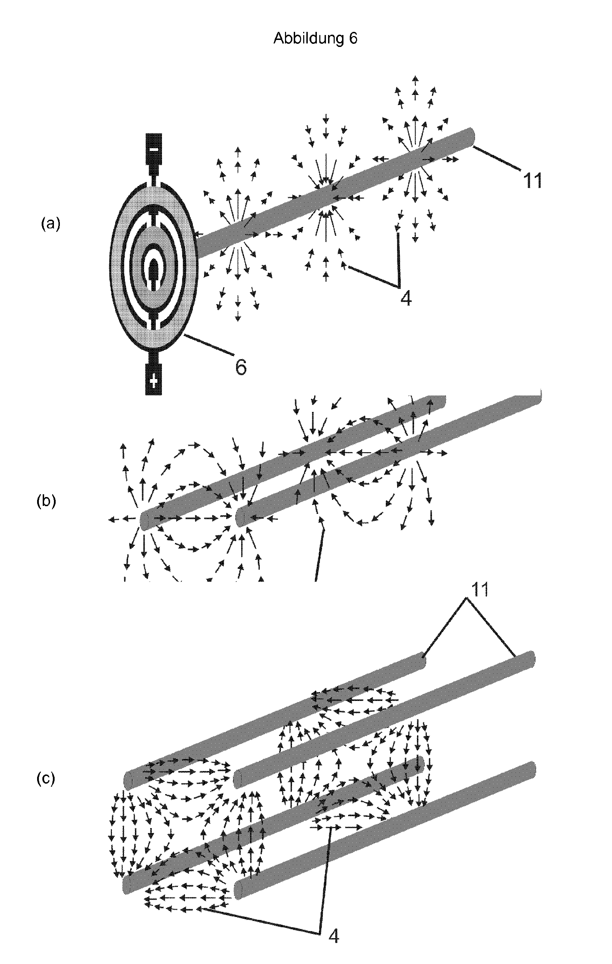

In Abb. 6 ist die Kombination von Emittern gemäß der Erfindung mit verschiedenen Wellenleitern dargestellt. Ein Emitter wie in Abb. 1 gezeigt erzeugt eine radial polarisierte Terahertz-Mode, die sich als Sommerfeldmode entlang eines Drahtes ausbreiten kann (Abb. 6a). Der Draht wird hierfür mit der Mitte des Emitters verbunden, gegebenenfalls wird der Durchmesser des Drahtes konisch angepasst. Der Detektor wird analog an den Draht angebunden. Abb. 5b zeigt eine dipolartige Feldverteilung einer Strahlungsmode, die sich geführt an zwei parallelen Drähten ausbreitet. Eine solche Mode lässt sich mit der Erfindung leicht erzeugen und detektieren. Die Elektroden der Antennen verlaufen dabei entlang der Äquipotentiallinien eines Dipols aus einer positiven und einer negativen Punktladung. Diese Art der Wellenführung erlaubt hohe Terahertz-Felder zwischen den Drähten zu konzentrieren, was für nichtlineare spektroskopische Untersuchungen interessant ist. Abb. 6c zeigt eine Anordnung von vier Drähten, die eine quadrupolartige Feldverteilung einer Strahlungsmode führen. Die Feldverteilung kann mit einer Antenne gemäß Abb. 3 erzeugt und detektiert werden. Der Übersicht halber ist die Feldverteilung im Wesentlichen zwischen den Drähten und nicht im Randbereich skizziert.

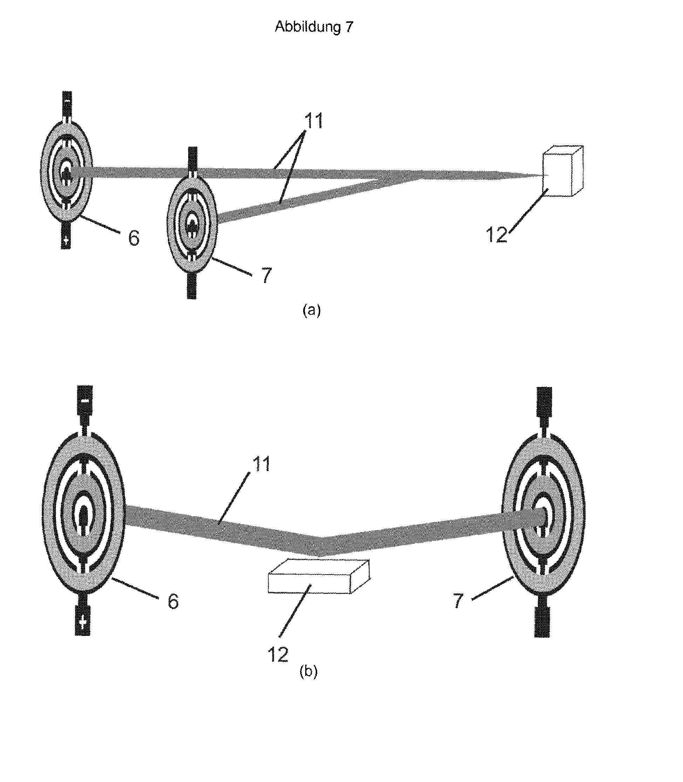

Abb. 7 zeigt ein Ausführungsbeispiel für ein Terahertz-Nahfeldmikroskop. Eine Sommerfeldmode wird über einen Draht geführt und an einem Knick (Abb. 7a) oder einer Spitze (Abb. 7b) in die Probe eingekoppelt. Die Spitze kann dabei durch Korrugation optimiert sein. In Abb. 7a durchläuft die Terahertz-Welle das System von links nach rechts, während in dem System in Abb. 6b die von der Spitze zurücklaufende Welle über einen Y-förmigen Terahertz-Richtkoppler zum Detektor gelangt. In beiden Fällen kann die Probe mit piezoelektrischen Antrieben in einem definierten Abstand relativ zum Knick bzw. zur Spitze verschoben werden, um so ein Terahertz-Raster-Bild zu erzeugen.

Elektrodenabstände im sub-Mikrometer-Bereich bis zu einigen Mikrometern oder einigen 10 Mikrometer sind vorteilhaft, da sie hohe Beschleunigungsfelder bei moderaten elektrischen Spannungen (im Bereich einiger 10 V bis einige 100 V) ermöglichen. Die Strukturen sind in der Fläche skalierbar und können der zur Verfügung stehenden optischen Leistung angepasst werden. Typische Abmessungen sind im Bereich einiger mm bis einiger cm.

Radial polarisierte Strahlung bietet nicht nur den Vorteil einer effizienten Kopplung an Wellenleiter (Sommerfeldmoden) sondern bietet auch als Welle im Freiraum vorteilhafte Eigenschaften. Sie lässt sich im Vergleich zu einer Gauß-Mode auf einen kleineren räumlichen Bereich fokussieren, was für Abbildungstechniken mit hoher Ortsauflösung und für nichtlineare Prozesse wichtig ist.

Radial fokussierte Terahertz-Wellen weisen im Fokus eine Komponente des elektrischen Feldes entlang der Ausbreitungsrichtung auf. Analog weisen azimutal polarisierte Terahertz-Wellen im Fokus eine Komponente des magnetischen Feldes entlang der Ausbreitungsrichtung auf. Diese neuen Eigenschaften sind vorteilhaft für die Untersuchung beispielsweise von Halbleiter Quantenstrukturen (Quantentröge, Quantenpunkte etc.). Für diese Strukturen gelten bestimmte Polarisationsauswahlregeln und die mit longitudinalen Feldern erlauben eine Untersuchung in sehr einfacher Probengeometrie, z. B. unter senkrechtem Einfall der Strahlung.

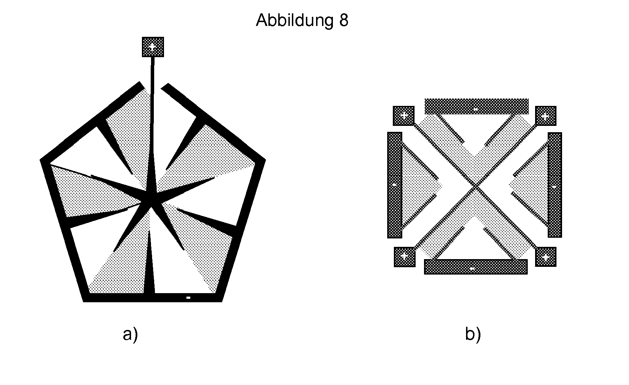

Abb. 8 zeigt mögliche Multipolanordnungen.

## Bezugszeichenliste

1 Elektroden
2 Unterbrechungen in den Metallisierungsstreifen
3 zweite Metallisierung
4 elektrische Feldlinie der abgestrahlten Mode
5 Linse
6 Terahertz-Emitter
7 Terahertz-Detektor
8 Wellenfronten der VIS- oder NIR-Strahlung
9 Wellenfronten der Terahertz-Strahlung
10 Achse der Terahertz-Ausbreitung
11 Draht als Terahertz-Wellenleiter
12 Probe

## Patentansprüche

1. Bauelement mit einer skalierbaren Terahertz-Antennenstruktur zur Emission und/oder Detektion von Terahertz-Strahlung einer frei wählbaren räumlichen Modenstruktur mit ortsabhängiger Polarisationsrichtung, wobei

   a. das Bauelement eine photoleitende Schicht auf einem geeigneten Substrat, und eine Antenne mit mindestens zwei räumlich voneinander getrennten Metallisierungen als Elektroden enthält,
   b. die Elektroden streifenförmig ausgestaltet sind, kammförmig ineinandergreifen und jeweils übernächste Nachbarn der Metallisierungsstreifen elektrisch verbunden sind,
   c. die photoleitende Schicht in einer Teilmenge der Zwischenräume zwischen diesen Metallisierungen so modifiziert ist, dass die Terahertz-Erzeugung bzw. Detektion in diesen Bereichen unterdrückt wird,
   d. Unterbrechungen der Metallisierungsstreifen zur Vermeidung von Kurzschlüssen zwischen den Elektroden vorgesehen sind,

   **dadurch gekennzeichnet,**

   a. **dass** die Metallisierungen der Elektroden nicht parallel streifenförmig ausgeführt sind, sondern stets senkrecht auf den Feldlinien der Mode angeordnet sind und sich entlang der Feldlinien periodisch wiederholen und
   b. **dass** sich Betrag und Richtung des elektrischen Feldes zwischen den Elektroden so ändern, dass die bei Anlegen einer Spannung erzeugte elektrische Feldstärkeverteilung der vorgegebenen Modenstruktur entspricht,

2. Bauelement nach Anspruch 1, **dadurch gekennzeichnet, dass** die Antennenstruktur zwei Elektroden aufweist und die Unterdrückung der Terahertz-Erzeugung bzw. Detektion in jedem zweiten Zwischenraum erfolgt.

3. Bauelement nach Anspruch 1, **dadurch gekennzeichnet, dass** die räumliche Modenstruktur eine elektrische Feldstärke in azimutaler Richtung aufweist.

4. Bauelement nach Anspruch 1, **dadurch gekennzeichnet, dass** die räumliche Modenstruktur einer Ordnung der Multipolentwicklung (größer zwei) entspricht.

5. Bauelement nach Anspruch 1, **dadurch gekennzeichnet, dass** die Unterdrückung der Terahertz-Emission in jedem zweiten Zwischenraum durch eine elektrisch von den Elektroden isolierte zweite Metallisierung, durch dielektrische Spiegel, durch Ionenimplantation zur Reduktion der Ladungsträgerbeweglichkeit, durch Ätzen von Gräben, oder durch Entfernung der photoleitenden Schicht in diesem Bereich erfolgt.

6. Terahertz-System bestehend aus einem Sender oder Empfänger nach Anspruch 1, **dadurch gekennzeichnet, dass** die Terahertz-Strahlung nicht fokussiert wird, sondern dass die anregende Laserstrahlung fokussiert wird.

7. Terahertz-System bestehend aus einem Sender oder Empfänger nach Anspruch 1, **dadurch gekennzeichnet, dass** die zu untersuchende Probe im Fokus der Komponente des magnetischen Feldes entlang der Ausbreitungsrichtung der azimutal polarisierten Terahertz-Welle untersucht wird.

Abbildung 1

(a)

(b)

(c)

(d)

Abbildung 2

(a)                    (b)                    (c)

Abbildung 3

(a)                    (b)                    (c)

Abbildung 4

Abbildung 5

(a)

(b)

Abbildung 6

(a)

11

4

6

(b)

11

(c)

11

4

Abbildung 7

(a)

(b)

Abbildung 8

a)

b)

Europäisches
Patentamt

European
Patent Office

Office européen
des brevets

**EUROPÄISCHER RECHERCHENBERICHT**

Nummer der Anmeldung

EP 09 16 0392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2006/047975 A1 (ROSSENDORF FORSCHZENT [DE]; HELM MANFRED [DE]; DEKORSKY THOMAS [DE]; D) 11. Mai 2006 (2006-05-11) | 1-2,5 | INV. H01Q9/00 G01N21/35 |
| Y | * Zusammenfassung; Abbildungen 1,2 * <br> * Seite 1, Absatz 1 - Seite 7, Absatz 2 * <br> ----- | 3-4,6-7 | |
| Y,D | WO 2006/019776 A2 (UNIV RICE WILLIAM M [US]; MITTLEMAN DANIEL [US]; WANG KANGLIN [US]) 23. Februar 2006 (2006-02-23) * Zusammenfassung; Abbildungen 1,2 * <br> * Seite 4, Zeile 23 - Seite 5, Zeile 24 * <br> ----- | 3-4,7 | |
| Y | GB 2 393 260 A (TERAVIEW LTD [GB]) 24. März 2004 (2004-03-24) * Zusammenfassung; Abbildung 3 * <br> * Seite 1 * <br> * Seite 9, Absatz 6 - Seite 10, Absatz 2 * <br> ----- | 6 | |
| A | EP 0 875 939 A1 (IMEC INTER UNI MICRO ELECTR [BE]; UNIV BRUXELLES [BE]) 4. November 1998 (1998-11-04) * Zusammenfassung; Abbildungen 1,2,4 * <br> * Spalte 1, Zeile 1 - Spalte 9, Zeile 30 * <br> ----- | 1-7 | RECHERCHIERTE SACHGEBIETE (IPC) <br> H01Q <br> G01N |
| A | GB 2 392 782 A (TERAVIEW LTD [GB]) 10. März 2004 (2004-03-10) * Zusammenfassung; Abbildungen 1-4 * <br> * Seite 9, Absatz 9 - Seite 12, Absatz 3 * <br> ----- <br> -/-- | 1-7 | |

Der vorliegende Recherchenbericht wurde für alle Patentansprüche erstellt

| Recherchenort | Abschlußdatum der Recherche | Prüfer |
|---|---|---|
| Den Haag | 22. Juli 2009 | Hüschelrath, Jens |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 09 16 0392

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WINNERL S ET AL: "Generation and Detection of THz Radiation With Scalable Antennas Based on GaAs Substrates With Different Carrier Lifetimes" IEEE JOURNAL OF SELECTED TOPICS IN QUANTUM ELECTRONICS, IEEE SERVICE CENTER, PISCATAWAY, NJ, US, Bd. 14, Nr. 2, 1. März 2008 (2008-03-01), Seiten 449-457, XP011206881 ISSN: 1077-260X * das ganze Dokument * ----- | 1-7 | |
| A | DREYHAUPT A ET AL: "High-intensity terahertz radiation from a microstructured large-area photoconductor" APPLIED PHYSICS LETTERS, AIP, AMERICAN INSTITUTE OF PHYSICS, MELVILLE, NY, US, Bd. 86, Nr. 12, 17. März 2005 (2005-03-17), Seiten 121114-1, XP012064697 ISSN: 0003-6951 * das ganze Dokument * ----- | 1-7 | |
| X,P | WINNERL S ET AL: "Terahertz vector beams" INFRARED, MILLIMETER AND TERAHERTZ WAVES, 2008. IRMMW-THZ 2008. 33RD INTERNATIONAL CONFERENCE ON, IEEE, PISCATAWAY, NJ, USA, 15. September 2008 (2008-09-15), Seiten 1-2, XP031398220 ISBN: 978-1-4244-2119-0 * das ganze Dokument * ----- | 1-5 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 22. Juli 2009 | Hüschelrath, Jens |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 16 0392

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2009

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 2006047975 | A1 | | 11-05-2006 | AT<br>DE<br>EP | 412255<br>102004046123<br>1825530 | T<br>A1<br>A1 | 15-11-2008<br>24-08-2006<br>29-08-2007 |
| WO 2006019776 | A2 | | 23-02-2006 | US | 2008309577 | A1 | 18-12-2008 |
| GB 2393260 | A | | 24-03-2004 | AU<br>WO | 2003269156<br>2004027942 | A1<br>A1 | 08-04-2004<br>01-04-2004 |
| EP 0875939 | A1 | | 04-11-1998 | AT<br>JP<br>US | 429035<br>11064100<br>6157035 | T<br>A<br>A | 15-05-2009<br>05-03-1999<br>05-12-2000 |
| GB 2392782 | A | | 10-03-2004 | AU<br>EP<br>WO<br>JP<br>US | 2003260782<br>1537604<br>2004023566<br>2005538542<br>2006152412 | A1<br>A1<br>A1<br>T<br>A1 | 29-03-2004<br>08-06-2005<br>18-03-2004<br>15-12-2005<br>13-07-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006047975 A
- US 20080023633 A1
- WO 2006019776 A
- JP 2000201026 A

**In der Beschreibung aufgeführte Nicht-Patentliteratur**

- **E.R. Brown ; K.A. McIntosh ; K.B. Nichols ; C.L. Dennis.** Photomixing up to 3.8 Terahertz-in low-temperature-grown GaAs. *Applied Physics Letters,* 1995, vol. 66, 285-287
- **J. A. Deibel ; K. Wang ; M. D. Escarra ; D. M. Mittleman.** *OPTICS EXPRESS,* 2006, vol. 14, 279-290
- **E. Castro-Camus ; J. Lloyd-Hughes ; M.B. Johnston ; M.D. Fraser ; H.H. Tan ; C. Jagadish.** *Applied Physics Letters,* 2005, vol. 86, 254102